(19) Europäisches Patentamt
European Patent Office
Office européen des brevets

(11) **EP 3 570 172 B1**

(12) **EUROPEAN PATENT SPECIFICATION**

(45) Date of publication and mention
of the grant of the patent:
**07.04.2021   Bulletin 2021/14**

(21) Application number: **17897128.9**

(22) Date of filing: **16.02.2017**

(51) Int Cl.:
***G06F 11/36*** *(2006.01)*

(86) International application number:
**PCT/JP2017/005674**

(87) International publication number:
**WO 2018/150507 (23.08.2018 Gazette 2018/34)**

(54) **TEST CASE SELECTION DEVICE AND TEST CASE SELECTION PROGRAM**

VORRICHTUNG ZUR AUSWAHL EINES TESTGEHÄUSES UND PROGRAMM ZUR AUSWAHL EINES TESTGEHÄUSES

DISPOSITIF DE SÉLECTION D'ESSAI TYPE ET PROGRAMME DE SÉLECTION D'ESSAI TYPE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.11.2019   Bulletin 2019/47**

(73) Proprietor: **Mitsubishi Electric Corporation Chiyoda-ku Tokyo 100-8310 (JP)**

(72) Inventors:
• **NOGUCHI, Reiya**
  **Tokyo 100-8310 (JP)**
• **ISODA, Makoto**
  **Tokyo 100-8310 (JP)**
• **BABA, Madoka**
  **Tokyo 100-8310 (JP)**
• **YONEMOCHI, Kazuki**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
**WO-A1-2012/066635      JP-A- 2008 003 985
JP-A- 2008 129 661       JP-A- 2015 090 616
US-A1- 2016 179 653      US-B1- 8 561 036**

**Description**

**Technical Field**

The present invention relates to a technique for selecting a test case to be performed on an after-change program, from a plurality of test cases performed on a before-change program.

**Background Art**

When a change is made to a program, it is necessary to perform a test in order to confirm whether the change has an unintended influence on the program, that is, an error has newly occurred in the program.

As a method to confirm whether a defect has newly occurred in a program, there is a method to perform on the program after the change all test cases that have been performed on the program before the change.

However, when a software development scale is large, a large number of test cases are involved; hence, the person-hours taken for performing all the test cases are increased. Further, since there is a necessity to manually reset expected output values in each test case based on a specification changed, the person-hours taken for resetting the expected output values in each test case is increased.

Therefore, it may be used a method to select a test case wherein a defect may be found associated with a change in the program, that is, a test case whereof execution results may differ between before and after the change in the program, and to only perform the test case selected.

Patent Literature 1 discloses a technique to extract an instruction that has an influence on a value of an output variable from a difference of a program between before and after a change, and to select a test case wherein the instruction extracted is performed.

Patent Literature 2 discloses a technique to extract a change in an output range by performing symbolic execution on each of a program before and after a change, and to select a test case to use an output variable whereof the range is changed. US8561036B1 discloses a computer-implemented method of identifying software test cases to be executed. The method includes determining one or more features changed in a software project, correlating the one or more features with one or more secondary source code files that exhibit the one or more features, and identifying test cases to be executed based on the correlation between the one or more features and the one or more secondary source code files.

**Citation List**

**Patent Literature**

Patent Literature 1: JP2016-164727 A
Patent Literature 2: JP2015-090616 A

**Summary of Invention**

**Technical Problem**

In the technique disclosed in Patent Literature 1, as a difference in the program before and after the change, a difference in the source code between before and after the change is detected by the statement. Therefore, a difference associated with refactoring that does not involve any functional change is also detected, and an instruction that has an influence on the value of the output variable is extracted from a difference associated with refactoring. Then, a test case wherein the output is not changed between before and after the change in the program, that is, a test case that is unnecessary to be performed may be selected. As a result, the test person-hours are increased.

In a technique disclosed in Patent Literature 2, when the range of the output variable is not changed even when the operation of the program is changed between before and after the change, it is impossible to detect the influence associated with the change in the program. Therefore, there is a possibility that a test case whereof the output may be changed between before and after the change in the program, i.e., a test case necessary to be performed again, may be overlooked.

The present invention is aimed at making it possible to select an important test case being a test case to be performed on an after-change program, from a plurality of test cases performed on a before-change program.

**Solution to Problem**

A test case selection apparatus according to one aspect of the present invention includes:

a non-equivalence set extraction unit to extract, from a target set list indicating one or more target sets each being a set of a before-change target function included in a before-change program, and an after-change target function being a function included in the after-change program, the function being corresponding to the before-change target function, but not being coincident with the before-change target function, a non-equivalence set being a target set that does not satisfy a condition that an output of the after-change target function is coincident with an output of the before-change target function when a same input is provided to both of the before-change target function and the after-change target function; and

a test case selection unit to select, from the plurality of test cases, a test case wherein a before-change target function included in the non-equivalence set is called, as the important test case. The invention concerns a test case selection apparatus as defined in claim 1 and a corresponding test case selection program as defined in claim 7.

Further advantageous enhancements of the invention are defined in the dependent claims 2 to 6.

**Advantageous Effects of Invention**

According to the present invention, it is possible to select an important test case being a test case to be performed on an after-change program, from a plurality of test cases performed on a before-change program.

**Brief Description of Drawings**

Fig. 1 is a configuration diagram of a test case selection apparatus 100 according to a first embodiment;
Fig. 2 is a flowchart of a test case selection method according to the first embodiment;
Fig. 3 is a before-change program 200 and an after-change program 210 according to the first embodiment;
Fig. 4 is a flowchart of a target set list generation process (S110) according to the first embodiment;
Fig. 5 is a diagram illustrating an after-change function list 220 according to the first embodiment;
Fig. 6 is a diagram illustrating a function correspondence table 230 according to the first embodiment;
Fig. 7 is a diagram illustrating a target set list 240 according to the first embodiment;
Fig. 8 is a flowchart of a non-equivalence set extraction process (S120) according to the first embodiment;
Fig. 9 is a diagram illustrating a function f according to the first embodiment;
Fig. 10 is a diagram illustrating a function g according to the first embodiment;
Fig. 11 is a diagram illustrating an equivalence list 250 according to the first embodiment;
Fig. 12 is a flowchart of a call list generation process (S130) according to the first embodiment;
Fig. 13 is a diagram illustrating a before-change program 260 according to the first embodiment;
Fig. 14 is a diagram illustrating a before-change program 261 according to the first embodiment;
Fig. 15 is a diagram illustrating a call list 270 according to the first embodiment;
Fig. 16 is a flowchart of a test case selection process (S140) according to the first embodiment;
Fig. 17 is a flowchart of a judgment process (S142) according to the first embodiment;
Fig. 18 is a diagram illustrating an important test case list 280 according to the first embodiment; and
Fig. 19 is a diagram of a hardware configuration of a test case selection apparatus 100 according to an embodiment.

**Description of Embodiment**

In the embodiment and the diagrams, same elements and corresponding elements are denoted by same signs. The explanation of the elements denoted by the same signs will be appropriately omitted or simplified. The arrows in the diagrams mainly illustrate flows of data or flows of processes.

First Embodiment.

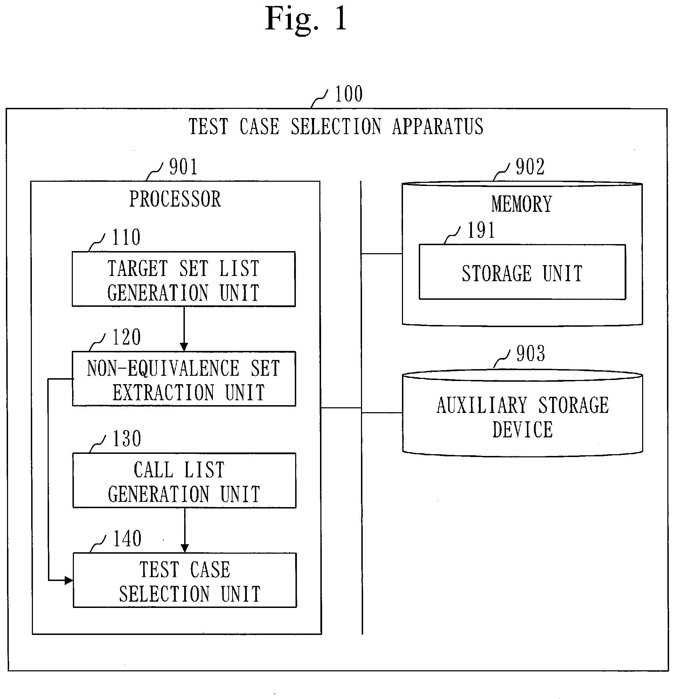

An explanation is provided of an embodiment wherein a test case to be performed on an after-change program is selected from a plurality of test cases performed on a before-change program based on Fig. 1 through Fig. 18.

***Explanation of Configuration***

Based on Fig. 1, a configuration of a test case selection apparatus 100 will be described.

The test case selection apparatus 100 is a computer equipped with hardware components such as a processor 901, a memory 902 and an auxiliary storage device 903. These hardware components are connected to one another via signal lines.

The processor 901 is an integrated circuit (IC) to perform arithmetic processing, controlling another hardware component. For example, the processor 901 is a central processing unit (CPU), a digital signal processor (DSP) or a graphics processing unit (GPU).

The memory 902 is a volatile storage device. The memory 902 is also referred to as a main storage device or a main memory. For example, the memory 902 is a random access memory (RAM). The data stored in the memory 902 is stored in the auxiliary storage device 903 as needed.

The auxiliary storage device 903 is a non-volatile storage device. For example, the auxiliary storage device 903 is a read only memory (ROM), a hard disk drive (HDD) or a flash memory. The data stored in the auxiliary storage device 903 is loaded into the memory 902 as needed.

The test case selection apparatus 100 is equipped with software components such as a target set list generation unit 110, a non-equivalence set extraction unit 120, a call list generation unit 130 and a test case selection unit 140. The software components are components realized by software.

The auxiliary storage device 903 stores a test case selection program to make the computer function as the target set list generation unit 110, the non-equivalence set extraction unit 120, the call list generation unit 130 and the test case selection unit 140. The test case selection program is loaded into the memory 902, and executed by the processor 901.

Further, the auxiliary storage device 903 stores an operating system (OS). At least a part of OS is loaded into the memory 902, and executed by the processor 901.

That is, the processor 901 executes the test case selection program while executing OS.

The data obtained by executing the test case selection program is stored in storage devices, such as the memory 902, the auxiliary storage device 903, a register inside the processor 901 and a cache memory inside the processor 901.

The memory 902 functions as a storage unit 191 to store data. However, another storage device may function as the storage unit 191 instead of the memory 902, or with the memory 902.

The test case selection apparatus 100 may be equipped with a plurality of processors substituting for the processor 901. The plurality of processors divide the roles of the processor 901.

It is possible for the test case selection program to store a non-volatile storage medium such as a magnetic disk, an optical disk or a flash memory, etc. in a computer-readable manner. The non-volatile storage medium is a tangible medium not being temporary.


***Explanation of Operation***

The test case selection apparatus 100 selects a test case to be performed on an after-change program from a plurality of test cases performed on a before-change program.

The before-change program is a program including one or more functions.

Each of the one or more functions included in the before-change program is called a before-change function.

The after-change program is the program whereto a change is added.

Each of one or more functions included in the after-change program is called an after-change function.

The test case is data indicating a procedure of a test for the program.

The test case to be performed on the after-change program is called an important test case.

Specifically, the important test case is a test case whereof execution results may be changed between before and after the change of the program. That is, the important test case is a test case for which a result obtained at the time when the important test case is performed on the after-change program may differ from a result obtained at the time when the important test case is performed on the before-change program.

The operation of the test case selection apparatus 100 corresponds to a test case selection method. Further, the procedure of the test case selection method corresponds to the procedure of the test case selection program.

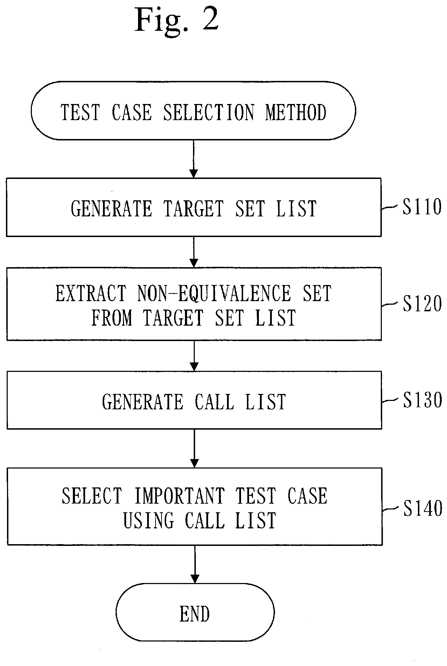

Based on Fig. 2, the test case selection method will be described.

In a step S110, the target set list generation unit 110 generates a target set list.

The target set list is a list denoting one or more target sets.

The target set is a set of a before-change target function and an after-change target function.

The before-change target function corresponds to the after-change target function, being a before-change function that is not coincident with the after-change target function.

The after-change target function corresponds to the before-change target function, being an after-change function that is not coincident with the before-change target function.

A target set list generation process (S110) will be described below in detail.

In a step S120, the non-equivalence set extraction unit 120 extracts a non-equivalence set from the target set list.

The non-equivalence set is a target set that does not satisfy a condition that an output of the before-change target function is coincident with an output of the before-change target function when a same input is given to both of the before-change target function and the after-change target function.

The non-equivalence set extraction process (S120) will be described below in detail.

In a step S130, the call list generation unit 130 generates a call list.

The call list is a list indicating for each test case a before-change function called when a before-change program is executed.

The call list generation process (S130) will be described below in detail.

In a step S140, the test case selection unit 140 selects an important test case by using the call list.

Specifically, the test case selection unit 140 selects as an important test case a test case whereby a before-change target function included in a non-equivalence set is called, from a plurality of test cases.

The test case selection process (S140) will be described below in detail.

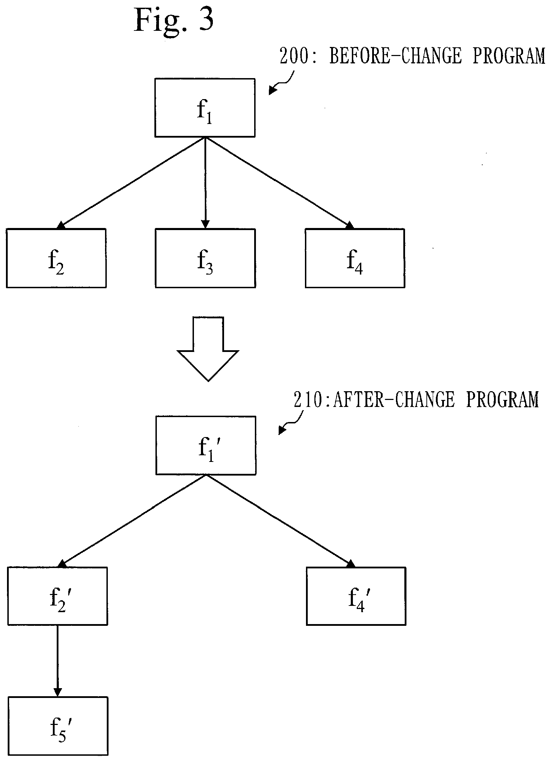

Fig. 3 illustrates a configuration example of each of a before-change program 200 and an after-change program 210.

The before-change program 200 includes four before-change functions ($f_1$, $f_2$, $f_3$, $f_4$). $f_2$, $f_3$, and $f_4$ are functions called from $f_1$.

The after-change program 210 includes four after-change functions ($f_1'$, $f_2'$, $f_4'$, $f_5'$). $f_5'$ is a function called from $f_2'$.

Hereinafter, explanation is provided by taking the before-change program 200 and the after-change program 210 as examples.

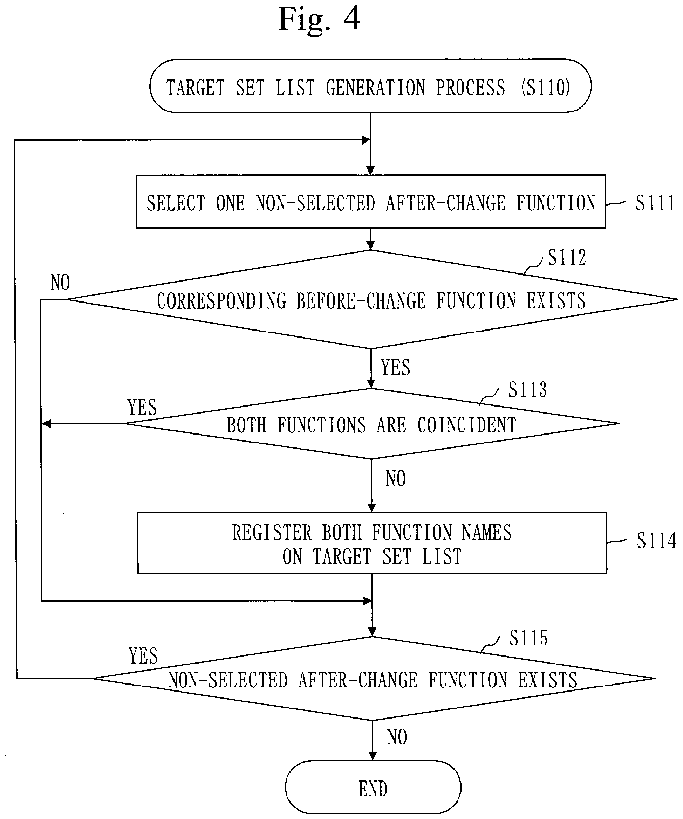

Based on Fig. 4, the target set list generation process (S110) will be described.

In a step S111, the target set list generation unit 110 selects one after-change function that is not selected from among one or more after-change functions included in the after-change program.

Specifically, the target set list generation unit 110 selects one after-change function that is not selected, from an after-change function list.

The after-change function list is a list indicating one or more after-change functions included in the after-change program, and is stored in a storage unit 191.

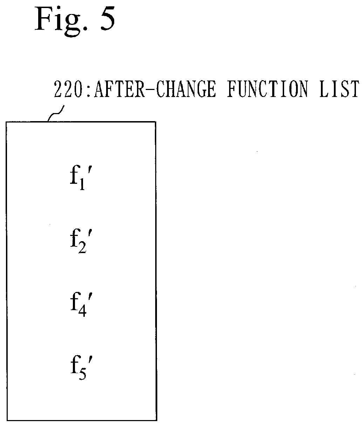

Fig. 5 illustrates an after-change function list 220.

The after-change function list 220 includes each function name of four after-change functions ($f_1'$, $f_2'$, $f_4'$, $f_5'$) included in the after-change program 210.

For example, the target set list generation unit 110 selects after-change functions in the order of function names included in the after-change function list 220, that is, the order of $f_1'$, $f_2'$, $f_4'$ and $F_5'$.

To return to Fig. 4, a step S112 is explained. In the explanation from the step S112 through a step S114, a selected after-change function selected means the after-change function selected in the step S111.

In the step S112, the target set list generation unit 110 judges whether an after-change function corresponding to the selected after-change function exists.

Specifically, the target set list generation unit 110 judges whether the selected after-change function is associated with a before-change function in a function correspondence table. When the selected after-change function is associated with a before-change function in the function correspondence table, a before-change function corresponding to the selected after-change function exists.

The function correspondence table is a table indicating sets of after-change functions and before-change functions corresponding to the after-change functions, which is stored in the storage unit 191.

When the before-change function corresponding to the selected after-change function exists, the procedure proceeds to the step S113.

When the before-change function corresponding to the selected after-change function does not exist, the procedure proceeds to the step S115.

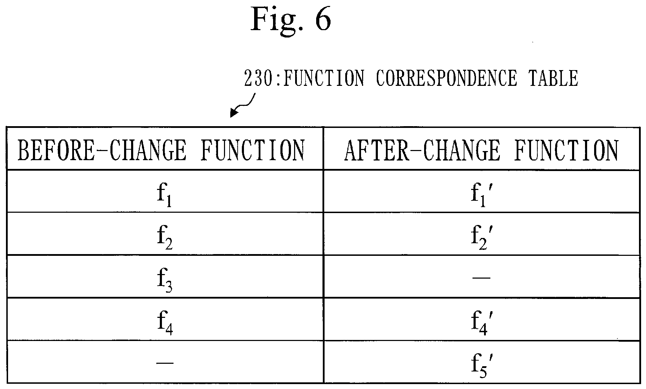

Fig. 6 illustrates a function correspondence table 230.

In the function correspondence table 230, a hyphen means that a corresponding function does not exist.

A case wherein the selected after-change function is $f_1'$ is explained. In the function correspondence table 230, the selected after-change function $f_1'$ is associated with the before-change function $f_1$. Therefore, the target set list generation unit 110 judges that the before-change function $f_1$ corresponding to the selected after-change function $f_1'$ exists.

A case wherein the selected after-change function is $f_5'$ is explained. In the function correspondence table 230, the selected after-change function $f_5'$ is not associated with a before-change function. Therefore, the target set list generation unit 110 judges that a before-change function corresponding to the selected after-change function $f_5$ does

not exist.

To return to Fig. 4, the step S113 is explained. In the explanation of the step S113 and the step S114, the corresponding before-change function means an after-change function corresponding to the selected after-change function.

In the step S113, by comparing source code of the selected after-change function with source code of the corresponding before-change function, the target set list generation unit 110 judges whether the source code of the selected after-change function is coincident with the source code of the corresponding before-change function. That is, the target set list generation unit 110 judges whether the selected after-change function is completely coincident with the corresponding before-change function on a text level.

The source code of each before-change function and the source code of each after-change function are stored in the storage unit 191.

When the source code of the selected after-change function is coincident with the source code of the corresponding before-change function, the procedure proceeds to a step S115.

When the source code of the selected after-change function is not coincident with the source code of the corresponding before-change function, the procedure proceeds to the step S114.

In the step S114, the target set list generation unit 110 registers on a target set list a target set including, as a before-change target function, the corresponding before-change function, and, as an after-change target function, the selected after-change function.

In the step S115, the target set list generation unit 110 judges whether an after-change function that is not selected exists.

When an after-change function that is not selected exists, the procedure proceeds to the step Sill.

When an after-change function that is not selected does not exist, the target set list generation process (S110) terminates.

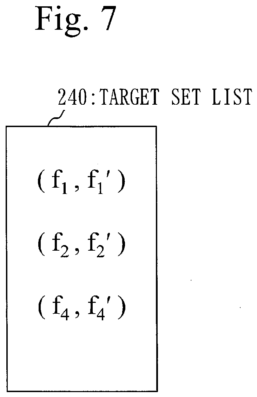

By the target set list generation process (S110), the target set list 240 of Fig. 7 is generated.

The target set list 240 indicates three target sets of $(f_1, f_1')$, $(f_2, f_2')$ and $(f_4, f_4')$.

In the target set $(f_1, f_1')$, the before-change function $f_1$ is a before-change target function, and the after-change function $f_1'$ is an after-change target function.

In the target set $(f_2, f_2')$, the before-change function $f_2$ is a before-change target function, and the after-change function $f_2'$ is an after-change target function.

In the target set $(f_4, f_4')$, the before-change function $f_4$ is a before-change target function, and the after-change function $f_4'$ is an after-change target function.

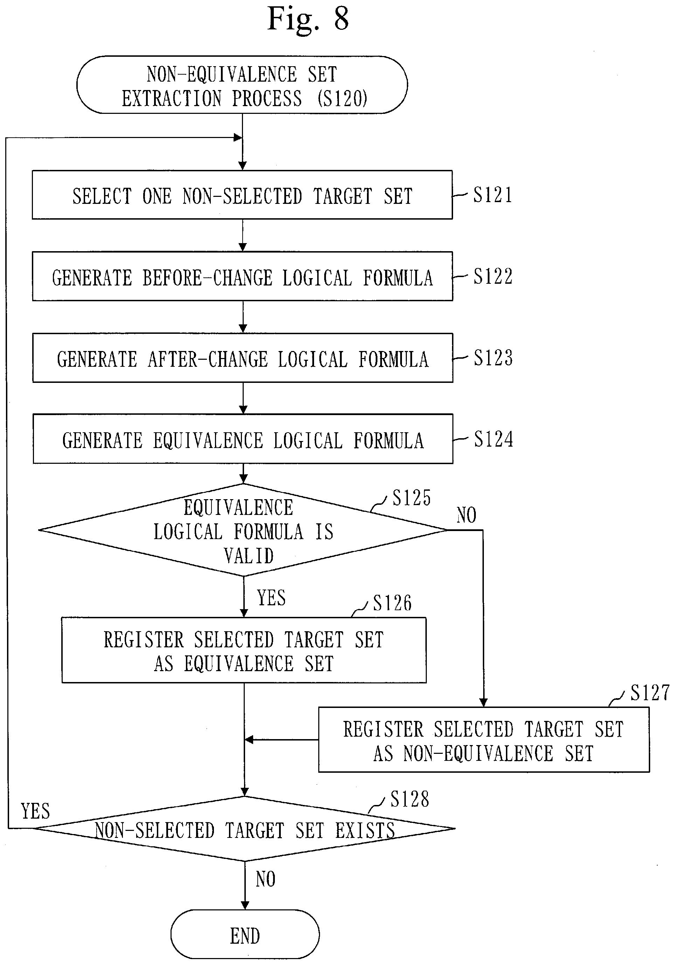

Based on Fig. 8, a non-equivalence set extraction process (S120) will be described.

In a step S121, the non-equivalence set extraction unit 120 selects one target set that is not selected from the target set list.

For example, the non-equivalence set extraction unit 120 selects target sets in the order of the target sets indicated in the target set list 240 of Fig. 7, that is, the order of $(f_1, f_1')$, $(f_2, f_2')$ and $(f_4, f_4')$.

In the explanation from a step S122 through a step S127, a selected target set mean a target set selected in the step S121.

In the step S122, the non-equivalence set extraction unit 120 generates a logical formula of the before-change target function indicated in the selected target set. The logical formula of the before-change target function is called a before-change logical formula.

The before-change logical formula is a logical formula established in a before-change target function. In other words, the before-change logical formula is a logical formula representing a condition that is established after execution of the before-change target function.

Specifically, the non-equivalence set extraction unit 120 generates the before-change logical formula as follows.

First, the non-equivalence set extraction unit 120 converts, for each statement (instruction) included in the source code of the before-change target function, the statement into a statement logical formula according to a conversion rule. In this manner, a plurality of statement logical formulas are obtained. The conversion rule is a rule for converting a statement into a statement logical formula. For example, the conversion rule indicates, for each pattern of the statement, a pattern of a statement logical formula. The statement logical formula is a logical formula that is established in the statement.

Then, the non-equivalence set extraction unit 120 concatenates a plurality of statement logical formulas in accordance with a concatenation rule. In this manner, a before-change logical formula is obtained. The concatenation rule is a rule for concatenating a plurality of statement logical formulae. For example, the concatenation rule indicates, for each combination of patterns of the statement logical formulas, a pattern of a logical formula.

For example, the condition that is established after execution of a function is a condition as follows.

(A) A value c is substituted for a variable x by execution of the function. A condition that is established after execution of the function is x=c.

(B) A statement $S_1$ and a statement $S_2$ are executed in order by execution of the function. A condition that is established after execution of the function is a condition that is established in a case wherein the statement $S_2$ is executed under the condition that is established after execution of the statement $S_1$.

(C) The statement $S_1$ is executed when the condition B is established by execution of the function, and the statement $S_2$ is executed when the condition B is not established.

The condition that is established after execution of the function is a logical sum of a first logical product and a second logical product. The first logical product is a logical product of the condition that is established after execution of the statement $S_1$ and the condition B. The second logical product is a logical product of the condition that is established after execution of the statement $S_2$ and negative of the condition B.

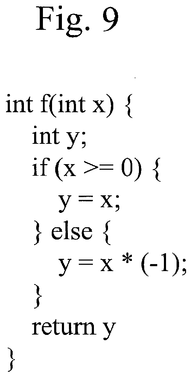

For example, a logical formula of a function f indicated in Fig. 9 is represented by a formula (1). Fig. 9 indicates the source code of the function f described in C programming language.

[Expression 1]

$$(x{\geq}0{\wedge}y{=}x){\vee}(x{<}0{\wedge}y{=}{-}x) \quad \text{Formula(1)}$$

When another function in the target function is called, a logical formula of the target function is generated as follows. In the description below, a target function is referred to as a caller function, and a function called is referred to as a callee function.

(a) The callee function is a function deleted or added in accordance with a change in a program. That is, the callee function is included in a before-change program, while a function corresponding to the callee function is not included in an after-change program. Otherwise, the function corresponding to the callee function is not included in the before-change program, while the callee function is included in the after-change program. In this case, a logical formula of a function obtained by expanding the callee function in the caller function.

For example, in Fig. 3, the function $f_3$ called in the function $f_1$ is included in the before-change program 200, while the function corresponding to the function $f_3$ is not included in the after-change program 210. Therefore, after a statement for calling the function $f_3$ in the function $f_1$ is replaced by a statement in the function $f_3$, a logical formula of the function $f_1$ is generated.

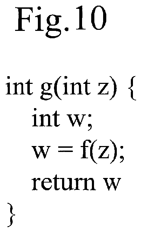

In a function g indicated in Fig. 10, the function f indicated in Fig. 9 is called. The function f is a function deleted or added in accordance with a change in a program. In this case, the logical formula of the function g is represented by a formula (2). Fig. 10 indicates the source code of the function g described in C programming language.

[Expression 2]

$$(x{=}z) \wedge ((x{\geq}0{\wedge}y{=}x) \vee (x{<}0{\wedge}y{=}{-}x)) \wedge (y{=}w) \quad \text{Formula(2)}$$

(b) The callee function is not a function that is deleted or added in accordance with a change in the program. That is, the callee function is included in the before-change program, and a function corresponding to the callee function is included in the after-change program. In this case, the callee function is not expanded in the caller function, and a logical formula of the caller function is generated. Then, a condition that "when the callee function is equivalent to a function corresponding to the callee function, the caller function is equivalent to a function corresponding to the caller function" is satisfied.

For example, in Fig. 3, the function $f_2$ and the function $f_4$ called in the function $f_1$ are included in the before-change program 200. Then, a function $f_2$' corresponding to the function $f_2$ and a function $f_4$' corresponding to the function $f_4$ are included in the after-change program 210. Therefore, a logical formula of the function $f_1$ is generated without replacing a statement to call the function $f_2$ and a statement to call the function $f_4$ for a statement in the function $f_2$ and a statement in the function $f_4$. Then, a condition that "when the function $f_2$ is equivalent to the function $f_2$', and the function $f_4$ is equivalent to the function $f_4$', the function $f_1$ is equivalent to the function $f_1$'" is satisfied.

In the function g indicated in Fig. 10, the function f indicated in Fig. 9 is called. The function f is not a function that is deleted or added in accordance with a change in the program. In this case, the logical formula of the function g is represented by a formula (3).

[Expression 3]

$$w=f(z) \qquad \text{Formula (3)}$$

To return to Fig. 8, explanation is continued from a step S123.

In the step S123, the non-equivalence set extraction unit 120 generates a logical formula of the after-change target function indicated in a selected target set. The logical formula of the after-change target function is referred to as an after-change logical formula.

The after-change logical formula is a logical formula that is established in the after-change target function. In other words, the after-change logical formula is a logical formula representing a condition that is satisfied after execution of the after-change target function.

A method to generate the after-change logical formula is the same as the method to generate the before-change logical formula (refer to the step S121).

In the step S124 and the step S125, the non-equivalence set extraction unit 120 judges whether the selected target set is a non-equivalence set by using the before-change logical formula and the after-change logical formula.

Specifically, the non-equivalence set extraction unit 120 makes a judgment as follows.

In the step S124, the non-equivalence set extraction unit 120 generates an equivalence logical formula corresponding to the before-change target function and the after-change target function by using the before-change logical formula and the after-change logical formula.

The equivalence logical formula is a logical formula representing equivalence between the before-change target function and the after-change target function.

An equivalence logical formula corresponding to a function F and a function G is represented by a formula (4).

It is assumed that a logical formula of the function F is $P_1$, an input variable of the function F is $i_1$, and an output variable of the function F is $o_1$. Further, it is assumed that a logical formula of the function G is $P_2$, an input variable of the function G is $i_2$, and an output variable of the function G is $o_2$.

[Expression 4]

$$(i_1 = i_2) \land P_1 \land P_2 \rightarrow (o_1 = o_2) \qquad \text{Formula (4)}$$

The equivalence logical formula of the formula (4) means that when a same input is given to both of the function F and the function G, the output of the function F is coincident with the output of the function G.

Therefore, if the equivalence logical formula of the formula (4) is valid, the function F is equivalent to the function G. Further, if the equivalence logical formula of the formula (4) is not valid, the function F is not equivalent to the function G.

In a step S125, the non-equivalence set extraction unit 120 judges whether the equivalence logical formula generated in the step S124 is valid.

Whether the equivalence logical formula is valid results in a satisfiability judgment problem of a propositional logical formula, which can be judged by using a tool called a SAT solver. SAT is an abbreviation for satisfiability problem.

If the equivalence logical formula generated in the step S124 is valid, the procedure proceeds to a step S126.

If the equivalence logical formula generated in the step S124 is not valid, the procedure proceeds to a step S127.

In the step S126, the non-equivalence set extraction unit 120 registers selected target sets as equivalence sets on an equivalence set file.

The equivalence set file indicates whether each target set is an equivalence set.

In the step S127, the non-equivalence set extraction unit 120 registers selected target sets as non-equivalence sets on the equivalence set file.

In a step S128, the non-equivalence set extraction unit 120 judges whether a target set that is not selected exists.

When a target set that is not selected exists, the procedure proceeds to the step S121.

When a target set that is not selected does not exist, the non-equivalence set extraction process (S120) terminates.

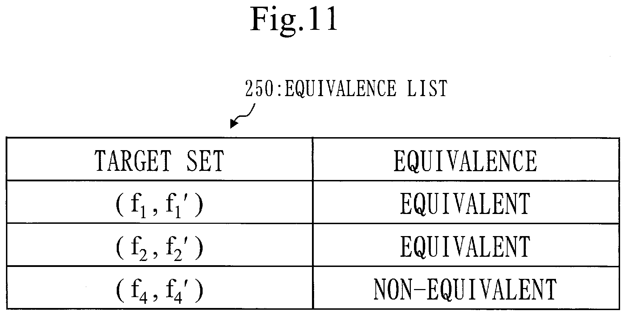

By the non-equivalence set extraction process (S120), an equivalence list 250 of Fig. 11, for example, is generated.

In the equivalence list 250, the target set $(f_1, f_1')$ and the target set $(f_2, f_2')$ are equivalence sets, and the target set $(f_4, f_4')$ is a non-equivalence set.

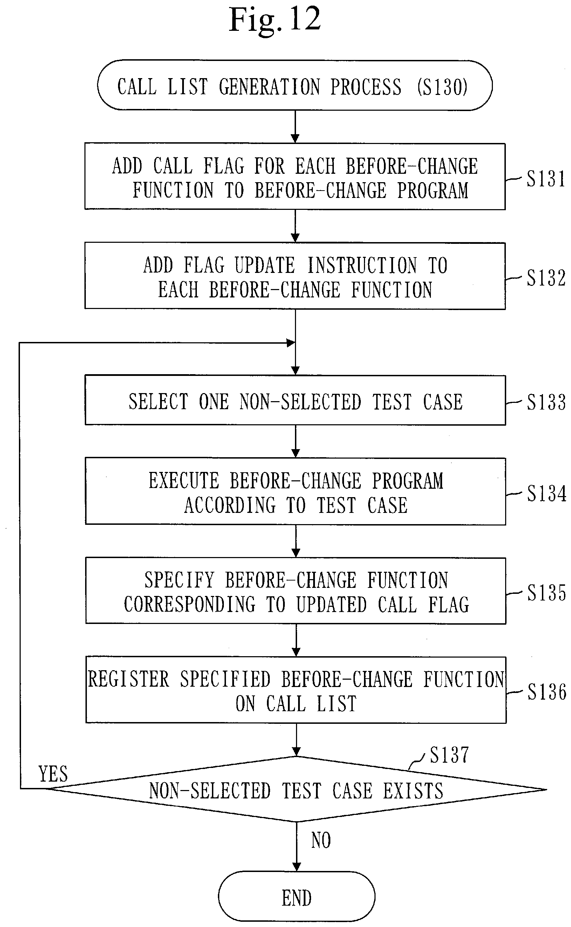

Based on Fig. 12, a call list generation process (S130) will be described.

In the step S131, the call list generation unit 130 adds a call flag for each before-change function to the before-change program.

The call flag is a flag to be updated when the before-change function is called.

Specifically, the call list generation unit 130 adds for each before-change function except for an entry function, a declaration of a global variable for the before-change functions to the source code of the before-change program. The global variable functions as a call flag.

In a step S132, the call list generation unit 130 adds a flag update instruction to each before-change function.

The flag update instruction is an instruction to update the call flag.

Specifically, the call list generation unit 130 adds for each before-change function except for an entry function, a statement to add one to the global variable for the before-change function, to the head of the before-change function.

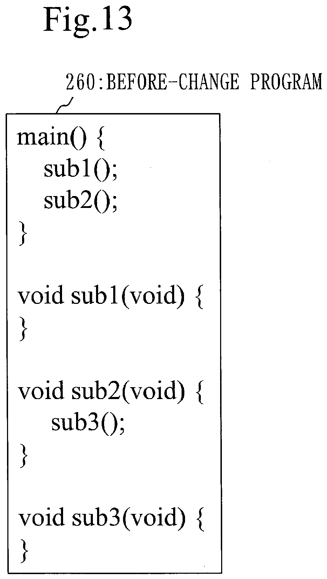

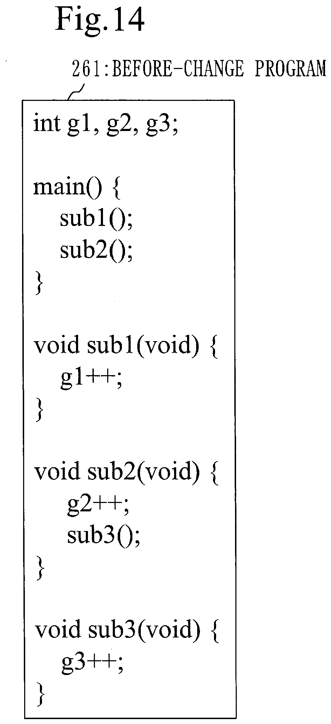

When the before-change program 260 in Fig. 13 is modified by a step S131 and a step S132, a before-change program 261 in Fig. 14 is obtained.

The before-change program 260 includes three before-change functions (sub1, sub2, sub3) except for an entry function "main".

In the before-change program 261, "int g1, g2, g3;" is a declaration to declare g1, g2 and g3 as global variations. Note that g1 is a call flag for sub1, g2 is a call flag for sub2, and g3 is a call flag for sub3. The initial value of each call flag is 0. g1++, g2++ and g3++ are flag update instructions. Each time sub1 is called, 1 is added to g1 by the flag update instruction (g1++). Each time sub2 is called, 1 is added to g2 by the flag update instruction (g2++). Each time sub3 is called, 1 is added to g3 by the flag update instruction (g3++).

For example, as a result of execution of the before-change program 261, if the function sub1 is not called even once, the value of the call flag g1 is not updated to remain 0. That is, when the value of the call flag g1 is 0, the before-change function sub1 corresponding to the call flag g1 is not called.

For example, as a result of execution of the before-change program 261, when the function sub1 is called N times, the value of the call flag g1 is updated. That is, when the value of the call flag g1 is N, the before-change function sub1 corresponding to the call flag g1 is called N times.

In a step S133, the call list generation unit 130 selects one test case that is not selected.

In the explanation from a step S134 through a step S136, a test case means the test case selected in the step S133, and a before-change program means the before-change program after the step S132.

In the step S134, the call list generation unit 130 executes the before-change program in accordance with the test case.

In the step S135, the call list generation unit 130 refers to a call flag for each before-change function, and specifies an updated call flag.

Then, the call list generation unit 130 specifies a before-change function corresponding to an updated call flag.

In the step S136, the call list generation unit 130 registers a specified before-change function on the call list.

Specifically, the call list generation unit 130 registers a function name of a specified before-change function specified on the call list by associating the function name with an identifier of a test case.

In a step S137, the call list generation unit 130 judges whether a test case that is not selected exists.

When a test case that is not selected exists, the procedure proceeds to the step S133.

When a test case that is not selected does not exist, the call list generation process (S130) terminates.

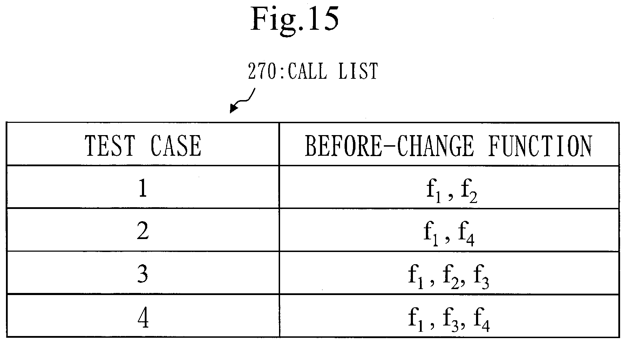

By the call list generation process (S130), a call list 270 indicated in Fig. 15, for example, is generated.

The call list 270 indicates a before-change function called when a before-change program is executed, for each test case, as follows.

When the test case (1) is executed, two before-change functions ($f_1$, $f_2$) are called.

When the test case (2) is executed, two before-change functions ($f_1$, $f_4$) are called.

When the test case (3) is executed, three before-change functions ($f_1$, $f_2$, $f_3$) are called.

When the test case (4) is executed, three before-change functions ($f_1$, $f_3$, $f_4$) are called.

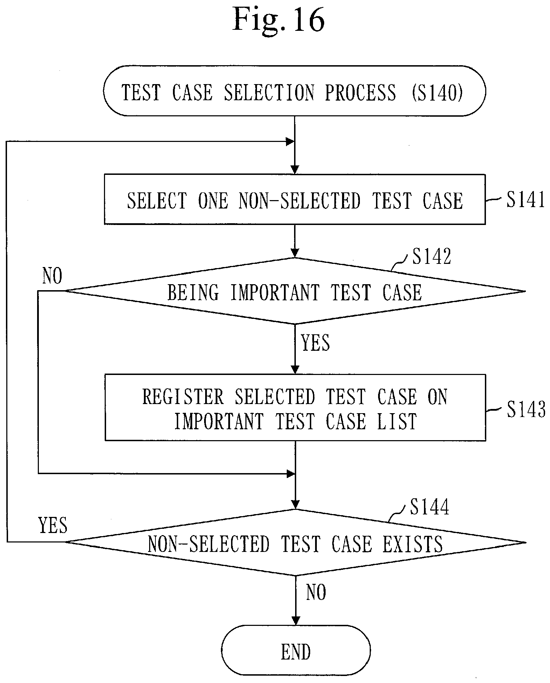

Based on Fig. 16, a test case selection process (S140) will be described.

In the test case selection process (S140), when a before-change function corresponding to a test case being a target among the before-change functions indicated in the call list is a before-change target function included in a non-equivalence set, the test case selection unit 140 judges that the test case being the target is an important test case.

In a step S141, the test case selection unit 140 selects one test case that is not selected, from the call list.

In a step S142 and a step S143, a selected test case means the test case selected in the step S141.

In the step S142, the test case selection unit 140 judges whether the selected test case is the important test case.

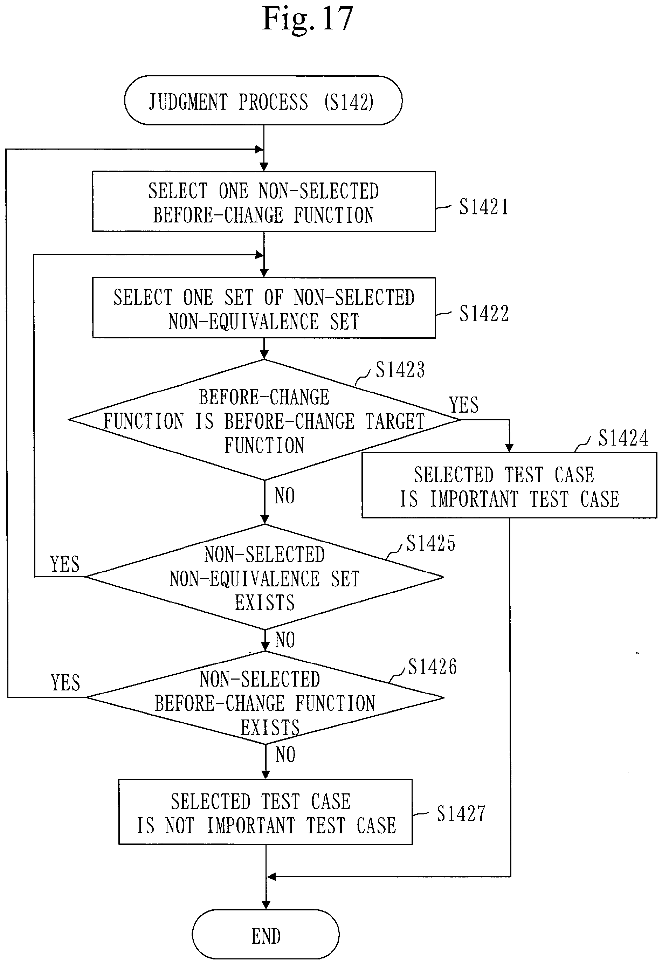

Based on Fig.17, a judgment process (S142) will be described.

In the judgment process (S142), when any of the before-change functions associated with the selected test case is a before-change target function included in any non-equivalence sets, the test case selection unit 140 judges that the selected test case is the important test case.

In a step S1421, the test case selection unit 140 selects, from the call list, one before-change function that is not selected from among before-change functions associated with the selected test case.

Step S1422, a step S1423 and a step S1425 are performed by taking the before-change function selected in the step S1421 as the target.

In the step S1422, the test case selection unit 140 selects one set of the non-equivalence set that is not selected, from the equivalence list.

In the step S1423, a before-change function means the before-change function selected in the step S1421, and a non-equivalence set means the non-equivalence set selected in the step S1422.

In the step S1423, the test case selection unit 140 judges whether a before-change function is a before-change target function included in the non-equivalence set.

When a before-change function is a before-change target function included in the non-equivalence set, the procedure proceeds to a step S1424.

When a before-change function is not a before-change target function included in the non-equivalence set, the procedure proceeds to a step S1425.

In the step S1424, the test case selection unit 140 judges that the selected test case is the important test case.

After the step S1424, the judgment process (S142) terminates.

In the step S1425, the test case selection unit 140 judges whether a non-equivalence set that is not selected exists.

When a non-equivalence set that is not selected exists, the procedure proceeds to the step S1422.

When a non-equivalence set that is not selected does not exist, the procedure proceeds to a step S1426.

In the step S1426, the test case selection unit 140 judges whether a before-change function that is not selected exists.

When a before-change function that is not selected exists, the procedure proceeds to the step S1421.

When a before-change function that is not selected does not exist, the procedure proceeds to a step S1427.

In the step S1427, the test case selection unit 140 judges that the selected test case is not the important test case.

After the step S1427, the judgment process (S142) terminates.

To return to Fig. 16, explanation is continued from a step S143.

In the step S143, the test case selection unit 140 registers the selected test case on an important test case list.

The important test case list is a list indicating an important test case.

In a step S144, the test case selection unit 140 judges whether a test case that is not selected exists.

When a test case that is not selected exists, the procedure proceeds to the step S141.

When a test case that is not selected does not exist, the test case selection process (S140) terminates.

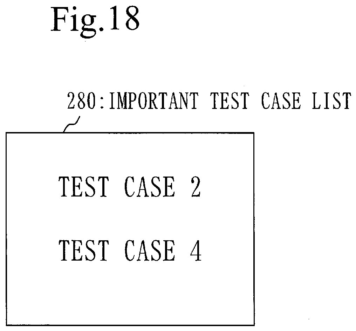

By the test case selection process (S140), an important test case list 280 indicated in Fig. 18, for example, is generated.

In an equivalence list 250 in Fig. 11, a before-change target function included in a non-equivalence set is the function f4.

In a call list 270 in Fig. 15, test cases associated with the function f4 are the test case 2 and the test case 4.

Therefore, the important test case list 280 in Fig. 18 indicates the test case 2 and the test case 4 as the important test cases.

***Effect of First Embodiment***

It is possible to divide a plurality of test cases performed on the before-change program into two types as follows.

The test case (1) is a test case wherein only an equivalent function that is not functionally changed between before and after a change in the program, that is, a test case whereof execution results are not changed between before and after the change in the program.

The test case (2) is a test case wherein a function that becomes functionally non-equivalent in accordance with the change in the program is called, that is, a test case whereof execution results may be changed between before and after the change in the program. The important test case in the first embodiment is the test case (2).

By dividing a plurality of test cases already executed into two types, it is possible to obtain effects as follow.

It is considered a case wherein test cases performed on a before-change program is performed on an after-change program in order to confirm that an unpredicted defect is mixed in accordance with the change in the program.

In this case, it is possible to select only a test case wherein the output is changed between before and after the change in the program, that is, a test case wherein a defect may be found. If the selected test case is only performed on the after-change program, it is possible to reduce the number of test cases performed on the after-change program.

In the first embodiment, equivalence of a function between before and after the change in the program is examined. Therefore, even a function whereof the output is judged to change in a conventional method is judged to be a function whereof the output is not changed if the function is functionally equivalent between before and after the change in the program. As a result, it is possible to find test cases whereof the output is not changed between before and after the change in the program more than by the conventional method, and to reduce the number of test cases to perform on the after-change program in comparison with the conventional method. In this manner, it is possible to reduce the cost involved in the test on the after-change program. Further, it becomes possible to reduce the workload to change an expected output value for each test case based on the specification of the after-change program, and to streamline the test process in development of the after-change program.

In the first embodiment, a test case whereof the output may be changed between before and after the change in the program is selected.

By using the other test case, that is, a test case whereof the output is not changed between before and after the change in the program, effects as follows can be obtained.

By performing the other test case on the after-change program, it is possible to test a part whose function is not changed between before and after the change in the program. Then, it becomes possible to confirm that the output is not changed between before and after the change in the program without changing the expected output value for each test case.

By using an examination result of equivalence of the function between before and after the change in the program, it is possible to obtain effects as follows.

In a non-equivalence function, it becomes possible to newly generate a test case for executing an instruction included in a pass that cannot be covered by the test case performed on the before-change program. That is, it becomes possible to execute a test to exhaustively verify a changed part in the program.

***Another Configuration***

The algorithm described in the non-equivalence set extraction process (S120) is an example of an algorithm to examine equivalence of a function. That is, it does not matter what a measure of equivalence examination is, only if it is possible to judge whether two functions are logically equivalent.

***Supplement for Embodiment***

In the embodiment, the functions of the test case selection apparatus 100 may be realized by hardware.

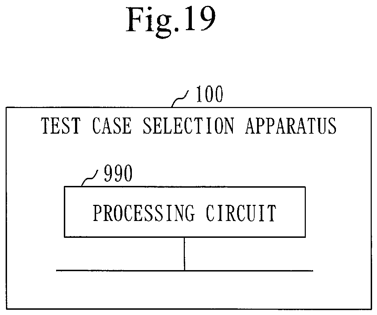

Fig. 19 illustrates a configuration in a case wherein the functions of the test case selection apparatus 100 are realized by hardware.

The test case selection apparatus 100 is equipped with a processing circuit 990. The processing circuit 990 is also called processing circuitry.

The processing circuit 990 is a dedicated electronic circuit to realize the target set list generation unit 110, the non-equivalence set extraction unit 120, the call list generation unit 130, the test case selection unit 140 and the storage unit 191.

For example, the processing circuit 990 is a single circuit, a composite circuit, a programmed processor, a parallel-programmed processor, a logic IC, a GA, an ASIC or an FPGA, or a combination thereof. GA is an abbreviation for gate array, ASIC is an abbreviation for application specific integrated circuit, and FPGA is an abbreviation for field programmable gate array.

The test case selection apparatus 100 may be equipped with a plurality of processing circuits substituting for the processing circuit 990. The plurality of processing circuits divide the roles of the processing circuit.

The functions of the test case selection apparatus 100 may be realized by a combination of software and hardware. That is, a part of the functions may be realized by software, and the other functions may be realized by hardware.

The embodiment is an example of a preferable embodiment, which is not aimed at limiting the technical range of the present invention. The embodiment may be partially performed, or may be performed by combining with another embodiment. The procedures described by using flowcharts, etc. may be changed as needed.

**Reference Signs List**

100: test case selection apparatus; 110: target set list generation unit; 120: non-equivalence set extraction unit; 130: call list generation unit; 140: test case selection unit; 191: storage unit; 200: before-change program; 210: after-change program; 220: after-change function list; 230: function correspondence table; 240: target set list; 250: equivalence list; 260: before-change program; 261: before-change program; 270: call list; 280: important test case list; 901: processor; 902: memory; 903: auxiliary storage device; 990: processing circuit

**Claims**

1. A test case selection apparatus (100) to select, from a plurality of test cases performed on a before-change program (200,260,261), an important test case being a test case to be performed on an after-change program (210), the test case selection apparatus comprising:

a non-equivalence set extraction unit (120) to extract, from a target set list (240) indicating one or more target sets each being a set of a before-change target function included in the before-change program (200,260,261), and an after-change target function being a function included in the after-change program (210), the function being corresponding to the before-change target function, but not being coincident with the before-change target function, a non-equivalence set being a target set that does not satisfy a condition that an output of the after-change target function is coincident with an output of the before-change target function when a same input is provided to both of the before-change target function and the after-change target function; and

a test case selection unit (140) to select, from the plurality of test cases, a test case wherein a before-change target function included in the non-equivalence set is called, as the important test case.

2. The test case selection apparatus (100) according to claim 1, further comprising a target set list generation unit (110) to generate the target set list, wherein

the target set list generation unit (110) judges whether a before-change function corresponding to an after-change function included in the after-change program (210) exists in one or more before-change functions included in the before-change program (200,260,261),

compares, when the before-change function corresponding to the after-change function exists in the one or more before-change functions, source code of the after-change function with source code of the before-change function corresponding to the after-change function, and

registers, when the source code of the after-change function is not coincident with the source code of the before-change function corresponding to the after-change function, a target set including the before-change function corresponding to the after-change function as the before-change target function, and including the after-change function as the after-change target function, on the target set list (240).

3. The test case selection apparatus (100) according to claim 1, wherein the non-equivalence set extraction unit (120) generates a before-change logical formula that is established in the before-change target function, generates an after-change logical formula that is established in the after-change target function, and judges whether the target set is the non-equivalence set by using the before-change logical formula and the after-change logical formula.

4. The test case selection apparatus (100) as defined in claim 1, wherein the test case selection unit (140) selects the important test case by using a call list (270) indicating, for each test case, before-change functions called in a case wherein the before-change program (200,260,261) is executed.

5. The test case selection apparatus (100) as defined in claim 4, wherein the test case selection unit (140) judges, when a before-change function corresponding to a test case being a target among the before-change functions indicated in the call list (270) is the before-change target function included in the non-equivalence set, that the test case being the target is the important test case.

6. The test case selection apparatus (100) as defined in claim 4, further comprising a call list generation unit (130)to generate the call list, wherein

the call list generation unit (130) adds a flag update instruction to update a call flag to each of the before-change functions,

executes, for each test case, a before-change program (200,260,261) after the flag update instruction has been added to each of the before-change functions, and

registers, for each test case, a before-change function corresponding to an updated call flag, on the call list (270).

7. A test case selection program to select, from a plurality of test cases performed on a before-change program (200,260,261), an important test case being a test case to be performed on an after-change program (210), the test case selection program making a computer execute:

a non-equivalence set extraction process to extract, from a target set list (240) indicating one or more target sets each being a set of a before-change target function included in the before-change program (200,260,261), and an after-change target function being a function included in the after-change program (210), the function being corresponding to the before-change target function, but not being coincident with the before-change target function, a non-equivalence set being a target set that does not satisfy a condition that an output of the after-change target function is coincident with an output of the before-change target function when a same input is provided to both of the before-change target function and the after-change target function; and

a test case selection process to select, from the plurality of test cases, a test case wherein a before-change target function included in the non-equivalence set is called, as the important test case.

**Patentansprüche**

1. Testfall-Auswahlvorrichtung (100), um aus einer Vielzahl von Testfällen, die in einem Vor-Änderung-Programm (200, 260, 261) durchgeführt werden, einen wichtigen Testfall, der ein Testfall ist, der in einem Nach-Änderung-Programm (210) durchzuführen ist, auszuwählen, wobei die Testfall-Auswahlvorrichtung umfasst:

   eine Nichtäquivalenz-Gruppe-Extrahierungseinheit (120), um aus einer Zielgruppenliste (240), anzeigend eine oder mehrere Zielgruppen, die jeweils eine Gruppe einer Vor-Änderung-Zielfunktion, die in dem Vor-Änderung-Programm (200, 260, 261) enthalten ist, und eine Nach-Änderung-Zielfunktion, die eine Funktion ist, die in dem Nach-Änderung-Programm (210) enthalten ist, wobei die Funktion mit der Vor-Änderung-Zielfunktion korrespondiert, aber nicht mit der Vor-Änderung-Zielfunktion übereinstimmt, sind, eine Nichtäquivalenz-Gruppe zu extrahieren, die eine Zielgruppe ist, die nicht eine Bedingung erfüllt, dass eine Ausgabe der Nach-Änderung-Zielfunktion mit einer Ausgabe der Vor-Änderung-Zielfunktion übereinstimmt, wenn eine gleiche Eingabe bereitgestellt ist für beide, die Vor-Änderung-Zielfunktion und die Nach-Änderung-Zielfunktion; und
   eine Testfall-Auswahleinheit (140), um aus der Vielzahl von Testfällen einen Testfall, bei dem eine in der Nichtäquivalenz-Gruppe enthaltene Vor-Änderung-Zielfunktion aufgerufen ist, als den wichtigen Testfall auszuwählen.

2. Testfall-Auswahlvorrichtung (100) nach Anspruch 1, ferner umfassend eine Zielgruppenliste-Erzeugungseinheit (110), um die Zielgruppenliste zu erzeugen, wobei
   die Zielgruppenliste-Erzeugungseinheit (110) beurteilt, ob eine Vor-Änderung-Funktion korrespondierend mit einer Nach-Änderung-Funktion, die in dem Nach-Änderung-Programm (210) enthalten ist, in einer oder mehreren Vor-Änderung-Funktionen vorhanden ist, die in dem Vor-Änderung-Programm (200, 260, 261) enthalten sind,
   wenn die Vor-Änderung-Funktion korrespondierend mit der Nach-Änderung-Funktion in der einen oder den mehreren Vor-Änderung-Funktionen vorhanden ist, einen Quellcode der Nach-Änderung-Funktion mit einem Quellcode der Vor-Änderung-Funktion korrespondierend mit der Nach-Änderung-Funktion vergleicht, und
   wenn der Quellcode der Nach-Änderung-Funktion mit dem Quellcode der Vor-Änderung-Funktion korrespondierend mit der Nach-Änderung-Funktion nicht übereinstimmt, eine Zielgruppe, enthaltend die Vor-Änderung-Funktion korrespondierend mit der Nach-Änderung-Funktion als die Vor-Änderung-Zielfunktion, und enthaltend die Nach-Änderung-Funktion als die Nach-Änderung-Zielfunktion, in der Zielgruppenliste (240) registriert.

3. Testfall-Auswahlvorrichtung (100) nach Anspruch 1, wobei die Nichtäquivalenz-Gruppe-Extrahierungseinheit (120) eine logische Vor-Änderung-Formel erzeugt, die in der Vor-Änderung-Zielfunktion festgelegt ist, eine logische Nach-Änderung-Formel erzeugt, die in der Nach-Änderung-Zielfunktion festgelegt ist, und beurteilt, ob die Zielgruppe die Nichtäquivalenz-Gruppe ist unter Verwendung der logischen Vor-Änderung-Formel und der logischen Nach-Änderung-Formel.

4. Testfall-Auswahlvorrichtung (100), wie in Anspruch 1 definiert, wobei die Testfall-Auswahleinheit (140) den wichtigen Testfall auswählt unter Verwendung einer Aufrufliste (270), anzeigend, für jeden Testfall, Vor-Änderung-Funktionen, die in einem Fall aufgerufen werden, in dem das Vor-Änderung-Programm (200, 260, 261) ausgeführt wird.

5. Testfall-Auswahlvorrichtung (100), wie in Anspruch 4 definiert, wobei die Testfall-Auswahleinheit (140) beurteilt, wenn eine Vor-Änderung-Funktion korrespondierend mit einem Testfall, der ein Ziel unter den Vor-Änderung-Funktionen ist, die in der Aufrufliste (270) angezeigt sind, die Vor-Änderung-Zielfunktion ist, die in der Nichtäquivalenz-Gruppe enthalten ist, dass der Testfall, der das Ziel ist, der wichtige Testfall ist.

6. Testfall-Auswahlvorrichtung (100), wie in Anspruch 4 definiert, ferner umfassend eine Aufrufliste-Erzeugungseinheit (130), um die Aufrufliste zu erzeugen, wobei
   die Aufrufliste-Erzeugungseinheit (130) eine Flag-Aktualisierungsanweisung, um ein Aufruf-Flag zu aktualisieren, zu jeder der Vor-Änderung-Funktionen hinzufügt,
   für jeden Testfall, ein Vor-Änderung-Programm (200, 260, 261) ausführt, nachdem die Flag-Aktualisierungsanweisung zu jeder der Vor-Änderung-Funktionen hinzugefügt wurde, und
   für jeden Testfall eine Vor-Änderung-Funktion korrespondierend mit einem aktualisierten Aufruf-Flag in der Aufrufliste (270) registriert.

7. Testfall-Auswahlprogramm, um aus einer Vielzahl von Testfällen, die in einem Vor-Änderung-Programm (200, 260, 261) durchgeführt werden, einen wichtigen Testfall auszuwählen, der ein Testfall ist, der in einem Nach-Änderung-Programm (210) durchzuführen ist, wobei das Testfall-Auswahlprogramm einen Computer veranlasst, auszuführen:

einen Nichtäquivalenz-Gruppe-Extrahierungsprozess, um aus einer Zielgruppenliste (240), anzeigend eine oder mehrere Zielgruppen, die jeweils eine Gruppe einer Vor-Änderung-Zielfunktion, die in dem Vor-Änderung-Programm (200, 260, 261) enthalten ist, und eine Nach-Änderung-Zielfunktion, die eine Funktion ist, die in dem Nach-Änderung-Programm (210) enthalten ist, wobei die Funktion mit der Vor-Änderung-Zielfunktion korrespondiert, aber nicht mit der Vor-Änderung-Zielfunktion übereinstimmt, sind, eine Nichtäquivalenz-Gruppe zu extrahieren, die eine Zielgruppe ist, die nicht eine Bedingung erfüllt, dass eine Ausgabe der Nach-Änderung-Zielfunktion mit einer Ausgabe der Vor-Änderung-Zielfunktion übereinstimmt, wenn eine gleiche Eingabe bereitgestellt ist für beide, die Vor-Änderung-Zielfunktion und die Nach-Änderung-Zielfunktion; und

einen Testfallauswahlprozess, um aus der Vielzahl von Testfällen einen Testfall, bei dem eine in der Nicht-Äquivalenzgruppe enthaltene Vor-Änderung-Zielfunktion aufgerufen ist, als den wichtigen Testfall auszuwählen.

## Revendications

1. Appareil de sélection de cas de test (100) destiné à sélectionner, parmi une pluralité de cas de test mis en œuvre sur un programme « avant modification » (200, 260, 261), un cas de test important, correspondant à un cas de test devant être mis en œuvre sur un programme « après modification » (210), l'appareil de sélection de cas de test comprenant :

une unité d'extraction d'ensemble de non-équivalence (120) destinée à extraire, d'une liste d'ensembles cibles (240) indiquant un ou plusieurs ensembles cibles, correspondant chacun à un ensemble d'une fonction cible « avant modification » incluse dans le programme « avant modification » (200, 260, 261), et d'une fonction cible « après modification » correspondant à une fonction incluse dans le programme « après modification » (210), la fonction étant correspondante à la fonction cible « avant modification », mais n'étant pas coïncidente avec la fonction cible « avant modification », un ensemble de non-équivalence, lequel correspond à un ensemble cible qui ne satisfait pas une condition selon laquelle une sortie de la fonction cible « après modification » est coïncidente avec une sortie de la fonction cible « avant modification » lorsqu'une même entrée est fournie à la fois à la fonction cible « avant modification » et à la fonction cible « après modification » ; et

une unité de sélection de cas de test (140) destinée à sélectionner, parmi la pluralité de cas de test, un cas de test dans lequel est appelée une fonction cible « avant modification » incluse dans l'ensemble de non-équivalence, en tant que le cas de test important.

2. Appareil de sélection de cas de test (100) selon la revendication 1, comprenant en outre une unité de génération de liste d'ensembles cibles (110) destinée à générer la liste d'ensembles cibles, dans lequel

l'unité de génération de liste d'ensembles cibles (110) : évalue si une fonction « avant modification », correspondant à une fonction « après modification » incluse dans le programme « après modification » (210), existe dans une ou plusieurs fonctions « avant modification » incluses dans le programme « avant modification » (200, 260, 261) ;

compare, lorsque la fonction « avant modification » correspondant à la fonction « après modification » existe dans ladite une ou lesdites plusieurs fonctions « avant modification », un code source de la fonction « après modification » à un code source de la fonction « avant modification » correspondant à la fonction « après modification » ; et

enregistre, lorsque le code source de la fonction « après modification » n'est pas coïncident avec le code source de la fonction « avant modification » correspondant à la fonction « après modification », un ensemble cible incluant la fonction « avant modification » correspondant à la fonction « après modification », en tant que la fonction cible « avant modification », et incluant la fonction « après modification », en tant que la fonction cible « après modification », sur la liste d'ensembles cibles (240).

3. Appareil de sélection de cas de test (100) selon la revendication 1, dans lequel l'unité d'extraction d'ensemble de non-équivalence (120) génère une formule logique « avant modification » qui est établie dans la fonction cible « avant modification », génère une formule logique « après modification » qui est établie dans la fonction cible « après modification », et évalue si l'ensemble cible est l'ensemble de non-équivalence, en utilisant la formule logique « avant modification » et la formule logique « après modification ».

4. Appareil de sélection de cas de test (100) selon la revendication 1, dans lequel l'unité de sélection de cas de test (140) sélectionne le cas de test important en utilisant une liste d'appels (270) indiquant, pour chaque cas de test, des fonctions « avant modification » appelées dans un cas où le programme « avant modification » (200, 260, 261) est exécuté.

5. Appareil de sélection de cas de test (100) selon la revendication 4, dans lequel l'unité de sélection de cas de test (140) évalue, lorsqu'une fonction « avant modification » correspondant à un cas de test qui est une cible parmi les fonctions « avant modification » indiquées dans la liste d'appels (270), est la fonction cible « avant modification » incluse dans l'ensemble de non-équivalence, que le cas de test qui est la cible correspond au cas de test important.

6. Appareil de sélection de cas de test (100) selon la revendication 4, comprenant en outre une unité de génération de liste d'appels (130) destinée à générer la liste d'appels, dans lequel
l'unité de génération de liste d'appels (130) : ajoute une instruction de mise à jour de fanion visant à mettre à jour un fanion d'appel à chacune des fonctions « avant modification » ;
exécute, pour chaque cas de test, un programme « avant modification » (200, 260, 261) après que l'instruction de mise à jour de fanion a été ajoutée à chacune des fonctions « avant modification » ; et
enregistre, pour chaque cas de test, une fonction « avant modification » correspondant à un fanion d'appel mis à jour, sur la liste d'appels (270).

7. Programme de sélection de cas de test destiné à sélectionner, parmi une pluralité de cas de test mis en œuvre sur un programme « avant modification » (200, 260, 261), un cas de test important correspondant à un cas de test devant être mis en œuvre sur un programme « après modification » (210), le programme de sélection de cas de test amenant un ordinateur à exécuter :

    un processus d'extraction d'ensemble de non-équivalence consistant à extraire, d'une liste d'ensembles cibles (240) indiquant un ou plusieurs ensembles cibles, correspondant chacun à un ensemble d'une fonction cible « avant modification » incluse dans le programme « avant modification » (200, 260, 261), et d'une fonction cible « après modification » correspondant à une fonction incluse dans le programme « après modification » (210), la fonction étant correspondante à la fonction cible « avant modification », mais n'étant pas coïncidente avec la fonction cible « avant modification », un ensemble de non-équivalence, lequel correspond à un ensemble cible qui ne satisfait pas une condition selon laquelle une sortie de la fonction cible « après modification » est coïncidente avec une sortie de la fonction cible « avant modification » lorsqu'une même entrée est fournie à la fois à la fonction cible « avant modification » et à la fonction cible « après modification » ; et
    un processus de sélection de cas de test consistant à sélectionner, parmi la pluralité de cas de test, un cas de test dans lequel est appelée une fonction cible « avant modification » incluse dans l'ensemble de non-équivalence, en tant que le cas de test important.

# Fig. 1

# Fig. 2

```
┌─────────────────────────────────┐
│   TEST CASE SELECTION METHOD     │
└─────────────────────────────────┘
                 │
                 ▼
┌─────────────────────────────────┐
│      GENERATE TARGET SET LIST    │──── S110
└─────────────────────────────────┘
                 │
                 ▼
┌─────────────────────────────────┐
│   EXTRACT NON-EQUIVALENCE SET    │──── S120
│      FROM TARGET SET LIST        │
└─────────────────────────────────┘
                 │
                 ▼
┌─────────────────────────────────┐
│        GENERATE CALL LIST        │──── S130
└─────────────────────────────────┘
                 │
                 ▼
┌─────────────────────────────────┐
│     SELECT IMPORTANT TEST CASE   │──── S140
│         USING CALL LIST          │
└─────────────────────────────────┘
                 │
                 ▼
            ┌─────────┐
            │   END   │
            └─────────┘
```

# Fig. 3

200: BEFORE-CHANGE PROGRAM

$$f_1$$

$$f_2 \quad f_3 \quad f_4$$

210:AFTER-CHANGE PROGRAM

$$f_1{}'$$

$$f_2{}' \quad f_4{}'$$

$$f_5{}'$$

# Fig. 4

TARGET SET LIST GENERATION PROCESS (S110)

SELECT ONE NON-SELECTED AFTER-CHANGE FUNCTION — S111

S112
CORRESPONDING BEFORE-CHANGE FUNCTION EXISTS

NO

YES

S113
BOTH FUNCTIONS ARE COINCIDENT

YES

NO

REGISTER BOTH FUNCTION NAMES
ON TARGET SET LIST — S114

S115
NON-SELECTED AFTER-CHANGE FUNCTION EXISTS

YES

NO

END

# Fig. 5

220:AFTER-CHANGE FUNCTION LIST

$$f_1'$$

$$f_2'$$

$$f_4'$$

$$f_5'$$

# Fig. 6

230:FUNCTION CORRESPONDENCE TABLE

| BEFORE-CHANGE FUNCTION | AFTER-CHANGE FUNCTION |
|:---:|:---:|
| $f_1$ | $f_1{}'$ |
| $f_2$ | $f_2{}'$ |
| $f_3$ | — |
| $f_4$ | $f_4{}'$ |
| — | $f_5{}'$ |

# Fig. 7

240:TARGET SET LIST

$$( f_1 , f_1' )$$

$$( f_2 , f_2' )$$

$$( f_4 , f_4' )$$

# Fig. 8

```
┌─────────────────────────────┐
│     NON-EQUIVALENCE SET      │
│   EXTRACTION PROCESS (S120)  │
└─────────────────────────────┘
               │
               ▼
┌─────────────────────────────────────────┐
│   SELECT ONE NON-SELECTED TARGET SET     │── S121
└─────────────────────────────────────────┘
               │
               ▼
┌─────────────────────────────────────────┐
│   GENERATE BEFORE-CHANGE LOGICAL FORMULA │── S122
└─────────────────────────────────────────┘
               │
               ▼
┌─────────────────────────────────────────┐
│   GENERATE AFTER-CHANGE LOGICAL FORMULA  │── S123
└─────────────────────────────────────────┘
               │
               ▼
┌─────────────────────────────────────────┐
│   GENERATE EQUIVALENCE LOGICAL FORMULA   │── S124
└─────────────────────────────────────────┘
               │
               ▼
            EQUIVALENCE              S125
         LOGICAL FORMULA IS ─────────────── NO
             VALID
               │
              YES          S126
               ▼
┌─────────────────────────────┐
│   REGISTER SELECTED TARGET SET │
│      AS EQUIVALENCE SET        │
└─────────────────────────────┘

                                        S127
                        ┌─────────────────────────────┐
                        │  REGISTER SELECTED TARGET SET │
                        │    AS NON-EQUIVALENCE SET     │
                        └─────────────────────────────┘

                  S128
       NON-SELECTED TARGET SET EXISTS
   YES
               │
              NO
               ▼
            ┌───────┐
            │  END  │
            └───────┘
```

# Fig. 9

```
int f(int x) {
    int y;
    if (x >= 0) {
        y = x;
    } else {
        y = x * (-1);
    }
    return y
}
```

# Fig.10

```
int g(int z) {
    int w;
    w = f(z);
    return w
}
```

# Fig.11

250:EQUIVALENCE LIST

| TARGET SET | EQUIVALENCE |
|---|---|
| $( f_1 , f_1' )$ | EQUIVALENT |
| $( f_2 , f_2' )$ | EQUIVALENT |
| $( f_4 , f_4' )$ | NON-EQUIVALENT |

# Fig. 12

```
CALL LIST GENERATION PROCESS (S130)
```

ADD CALL FLAG FOR EACH BEFORE-CHANGE
FUNCTION TO BEFORE-CHANGE PROGRAM — S131

ADD FLAG UPDATE INSTRUCTION TO
EACH BEFORE-CHANGE FUNCTION — S132

SELECT ONE NON-SELECTED TEST CASE — S133

EXECUTE BEFORE-CHANGE PROGRAM
ACCORDING TO TEST CASE — S134

SPECIFY BEFORE-CHANGE FUNCTION
CORRESPONDING TO UPDATED CALL FLAG — S135

REGISTER SPECIFIED BEFORE-CHANGE FUNCTION
ON CALL LIST — S136

S137
YES    NON-SELECTED TEST CASE EXISTS

NO

```
END
```

# Fig.13

260:BEFORE-CHANGE PROGRAM

```
main() {
    sub1();
    sub2();
}

void sub1(void) {
}

void sub2(void) {
    sub3();
}

void sub3(void) {
}
```

# Fig.14

261:BEFORE-CHANGE PROGRAM

```
int g1, g2, g3;

main() {
    sub1();
    sub2();
}

void sub1(void) {
    g1++;
}

void sub2(void) {
    g2++;
    sub3();
}

void sub3(void) {
    g3++;
}
```

# Fig.15

270:CALL LIST

| TEST CASE | BEFORE-CHANGE FUNCTION |
|---|---|
| 1 | $f_1, f_2$ |
| 2 | $f_1, f_4$ |
| 3 | $f_1, f_2, f_3$ |
| 4 | $f_1, f_3, f_4$ |

# Fig. 16

TEST CASE SELECTION PROCESS (S140)

SELECT ONE NON-SELECTED TEST CASE — S141

S142
BEING IMPORTANT TEST CASE

NO

YES

REGISTER SELECTED TEST CASE ON
IMPORTANT TEST CASE LIST — S143

S144
NON-SELECTED TEST CASE EXISTS

YES

NO

END

# Fig.17

```
        ┌─────────────────────────────┐
        │  JUDGMENT PROCESS (S142)    │
        └─────────────────────────────┘
                      │
    ┌────────────────▼──────────────────┐
    │  ┌──────────────────────────────┐ │
    │  │   SELECT ONE NON-SELECTED    │─┼─ S1421
    │  │   BEFORE-CHANGE FUNCTION     │ │
    │  └──────────────────────────────┘ │
    │               │                    │
    │  ┌────────────▼─────────────────┐  │
    │  │  SELECT ONE SET OF NON-      │──┼─ S1422
    │  │  SELECTED NON-EQUIVALENCE SET│  │
    │  └──────────────────────────────┘  │
```

SELECT ONE NON-SELECTED BEFORE-CHANGE FUNCTION — S1421

SELECT ONE SET OF NON-SELECTED NON-EQUIVALENCE SET — S1422

S1423 — BEFORE-CHANGE FUNCTION IS BEFORE-CHANGE TARGET FUNCTION — YES → S1424 SELECTED TEST CASE IS IMPORTANT TEST CASE

NO

S1425 — NON-SELECTED NON-EQUIVALENCE SET EXISTS — YES

NO

S1426 — NON-SELECTED BEFORE-CHANGE FUNCTION EXISTS — YES

NO

SELECTED TEST CASE IS NOT IMPORTANT TEST CASE — S1427

END

# Fig.18

280:IMPORTANT TEST CASE LIST

TEST CASE 2

TEST CASE 4

# Fig.19

/ 100

```
TEST CASE SELECTION APPARATUS

    / 990
  ┌─────────────────────────────┐
  │    PROCESSING CIRCUIT       │
  └─────────────────────────────┘
```

**REFERENCES CITED IN THE DESCRIPTION**

**Patent documents cited in the description**

- US 8561036 B1
- JP 2016164727 A
- JP 2015090616 A